# EUROPEAN PATENT APPLICATION

(11) **EP 4 697 263 A1**
(43) Date of publication of application: **18.02.2026**
(21) Application number: 24194033.7
(22) Date of filing: 12.08.2024
(51) Int. Cl.: G06T 7/254

(54) **DETECTING A MOTION ARTIFACT IN MEDICAL IMAGING DATA**

(71) Applicant: Siemens Healthineers AG, 91301 Forchheim (DE)
(72) Inventor: Dickmann, Jannis, 91052 Erlangen (DE); Geiger, Bernhard, Cranbury, 08512 (US)
(74) Representative: Siemens Healthineers Patent Attorneys

(57) **Abstract**

A method for detecting a motion artifact (12a-12k) in medical imaging data, which comprises a first acquired dataset (5a) representing a first region and a second acquired dataset (5b) representing a second region, wherein the first and the second region overlap in an overlap region, is provided. A first image (6a) representing the overlap region is generated depending on the first acquired dataset (5a) and a second image (6b) representing the overlap region is generated depending on the second acquired dataset (5b). A difference map (7) is generated by subtracting the first image (6a) and the second image (6b) from each other. The motion artifact (12a-12k) is detected by determining a connected region (8, 8a-8d) in the difference map (7), wherein an absolute value of the difference map (7) is equal to or greater than a predefined threshold value within the connected region (8, 8a-8d).

## Description

The present invention is directed to a computer-implemented method for detecting a motion artifact in medical imaging data, to a corresponding method for medical imaging, to a data processing system for carrying out said computer-implemented method, and to a corresponding computer program product.

Many medical imaging procedures, for example CT (computed tomography) or MRI (magnetic resonance imaging) acquisitions of the chest, are frequently carried out while the patient holds their breath to prevent the organs from moving due to breathing. It is desirable to develop systems that make the breath hold unnecessary for various reasons: sick patients might not be able to hold the breath or might not able to follow the instructions of the medical staff, or the acquisitions are used for radiotherapy treatment planning, where treatment delivery time is too long to hold the breath and thus time-resolved information of the tumor location is required.

A possible solution is to make multiple shorter acquisitions at the same breathing phase and stitch them together later. This can be done for multiple phases of the breathing cycle to acquire time-resolved data. This is leveraged by the fact that the speed of CT systems is so high that at least a block of data can be acquired quasi free of motion artifacts. If the timing is not perfect, however, and/or if the breathing motion is not consistent, the overall may show motion artifacts due to relative motion between subsequent acquisitions. Such motion artifacts may comprise steps and/or replications of structures and might not be usable for the intended purpose. Similar motion artifact may also arise due to other types of motion, such as heartbeat, peristalsis, or external patient motions or movements of the patient support.

If such motion artifacts could be detected reliably, they could be documented for further use and/or indicated to a user, for example highlighted in the reconstructed image, et cetera. The user may then for example decide whether the acquisition has to be repeated or whether the motion artifact is not significant or not relevant for the intended purpose.

It is an objective of the present invention to provide a possibility to detect motion artifacts in medical imaging data comprising two acquired datasets acquired at different time periods, whose represented regions overlap, in particular motion artifacts due to relative motions of patients and/or organs between the different time periods.

This objective is achieved by the subject matter of the independent claim. Further implementtations and preferred embodiments are subject matter of the dependent claims.

The invention is based on the idea to form a difference map for the overlap region and to determine a connected region in the difference map, wherein absolute values of the difference map are equal to or greater than a predefined threshold value within the connected region.

According to an aspect of the invention, a computer-implemented method for detecting a motion artifact in medical imaging data is provided. Therein, the medical imaging data is received and comprises a first acquired dataset acquired during a first time period and representing a first region of an object and a second acquired dataset acquired during a second time period and representing a second region of the object, wherein the second region of the object overlaps with the first region of the object in an overlap region. A first image representing at least the overlap region is generated depending on the first acquired dataset and a second image representing at least the overlap region is generated depending on the second acquired dataset. A difference map for the overlap region is generated by subtracting the first image and the second image from each other, in particular by subtracting the respective parts of the first image and the second image representing the overlap region from each other. The motion artifact is detected by determining a connected region in the difference map, such that absolute values of the difference map, in particular respective entries of the difference map, are equal to or greater than a predefined threshold value within the connected region, in particular for all entries within the connected region.

Unless stated otherwise, all steps of the computer-implemented method may be performed by a data processing system, which comprises at least one data processing device. In particular, the at least one data processing device is configured or adapted to perform the steps of the computer-implemented method. For this purpose, the at least one data processing device may for example store a computer program comprising instructions which, when executed by the at least one data processing device, cause the at least one data processing device to execute the computer-implemented method. The expressions "data processing system" and "at least one data processing device" may be used interchangeably, here and in the following. This holds also for respective expressions derived therefrom.

In case the at least one data processing device comprises two or more data processing devices, certain steps carried out by the at least one data processing device may also be understood such that different data processing devices carry out different steps or different parts of a step.

In particular, it is not required that each data processing device carries out the steps completely. In other words, carrying out the steps may be distributed amongst the two or more data processing devices.

From each implementation of the computer-implemented method, a respective implementation of a method for detecting a motion artifact, which is not purely computer-implemented, is obtained by including respective steps of generating the medical imaging data by a medical imaging device.

The first time period is different from the second time period. In general, they do not overlap. It is possible that the second time period follows directly after the first time period or vice versa. This is, however, not mandatory. Here and in the following, a motion artifact can be understood as an artifact, which origins from a motion of the object, which is for example a patient, or a part of the object, for example one or more organs of the patient, between the first time period and the second time period. As a consequence, the object or a part of the object has a different position with respect to the medical imaging device during the second time period compared to the first time period. For example, the motion artifact may be visible in a stitched image representing the first region and the second region is generated depending on the first acquired dataset and the second acquired dataset. The motion may for example include a respiratory motion, in particular of the chest and/or diaphragm of the patient, and/or a cardiac motion and/or a peristalsis motion and/or a motion of the patient itself and/or a motion of a patient support like a patient table et cetera. In particular, the motion artifact can occur whether or not there is a motion of the object or the part of the object during the first time period or during the second time period. In case the motion is a cyclic motion such as the respiratory motion or cardiac motion, the first and the second time period may for example nominally correspond to the same phase of the cyclic motion.

That the first image and the second image are subtracted from each other to generate the difference map may for example be understood such that the corresponding part of the first image representing the overlap region is subtracted from the corresponding part of the second image representing the overlap region or vice versa. The entries of the difference map may correspond to the respective differences between the image values of the first and the second image or, for example, to the absolute value of said differences. The difference map may also be considered as a two-dimensional or three-dimensional image. In other words, the first and the second image as well as the difference map may be interpreted as respective pixel values for each of a two-dimensional arrangement of pixels or respective voxel values for each of a three-dimensional arrangement of voxels, respectively.

Depending on the medical imaging device and the acquisition method used for generating the first acquired data set and the second acquired data set, these may represent the first region and the second region, respectively, two-dimensionally or three-dimensionally. For example, in case CT device or an MRI device is used, the first acquired data set and the second acquired data set may correspond to respective three-dimensional reconstructions.

Consequently, also the first image, the second image and the difference map are two-dimensional in case the first acquired data set and the second acquired data set, respectively, are two-dimensional datasets and the first image, the second image and the difference map are three-dimensional in case the first acquired data set and the second acquired data set, respectively, are three-dimensional datasets.

Detecting the motion artifact comprises at determining that the motion artifact is present. Optionally, detecting the motion artifact may comprise localizing the motion artifact, in particular by determining the location of the motion artifact in the difference map, classifying motion artifact according to defined criteria such as size or shape, et cetera.

The connected region may for example be a region of 4-connected pixels or 8-connected pixels in case the difference map is two-dimensional. In other words, two pixels are considered to belong to the same connected region, if they share a common side in case of a 4-connected region or if they share a common side or corner in case of an 8-connected region. Analogously, the connected region may for example be a region of 6-connected voxels or 18-connected voxels or 26-connected voxels in case the difference map is three-dimensional. In other words, two voxels are considered to belong to the same connected region, if they share a common face in case of a 6-connected region or if they share a common face or edge in case of an 18-connected region or if they share a common face or edge or corner in case of a 26-connected region. It is, however, to use different definitions of connectivity.

For determining the connected region, a thresholded difference map may for example be generated by setting all entries of the difference map to zero, whose absolute value is smaller than the threshold value. In this way, the connected region may be determined as a connected region of voxels of the threshold of difference map with non-zero entries.

Once the motion artifact has been detected by the computer-implemented method according to the invention, this finding may be used for different applications and purposes. For example, the existence and/or location and/or size and/or geometric shape and/or classification result may be documented, in particular store to a storage device with reference to medical imaging data or the stitched image. The motion artifact may also be highlighted in the stitched image in some cases. Said properties of the detected motion artifact may also be used to evaluate the significance or the criticality of the motion artifact. Depending on the result of the evaluation, the data acquisition may for example be repeated or partly repeated or a specific method intended for the image stitching may be used, which reduces for example the potential impact of the motion artifact.

According to several embodiments, a stitched image representing the first region and the second region is generated depending on the first acquired dataset and the second acquired dataset.

The stitched image may for example be generated by using a known image stitching method combine at least the first image and the second image with each other, in case the first image and the second image do not only represent the overlap region but the whole first region and the whole second region, respectively. It is also possible that a further first image representing the first region is generated based on the first acquired data set and a further first image representing the second region is generated based on the second acquired data set. The stitched image may then for example be generated by using a known image stitching method combine at least the further first image and the further second image with each other.

For example, the stitched image may comprise the first image or further first image for a part of the first region outside of the overlap region and the second image or further second image for a part of the second region outside of the overlap region. For the overlap region, the pixels or voxels of the stitched image may for example be given by averaged values of the respective pixels or voxels of the first image and the second image. The overlap region may, for example, consist of the first part of the overlap region and the second part of the overlap region. This approach may be denoted as blending. As an alternative to the blending, a first part of the overlap region may be given by the first image and a second part of the overlap region may be given by the second image. This approach may be denoted as stacking. It is also possible to combine the blending approach and the stacking approach. In this case, for example the first part of the overlap region may be given by the first image and the second part of the overlap region may for example be given by the averaged values of the respective pixels or voxels of the first image and the second image or vice versa.

The stitched image or a further processed version of the stitched image may for example be displayed on a display device of the data processing system.

According to several embodiments, a location of the motion artifact is determined by determining a location of the connected region based on the difference map and a user output is generated depending on the location of the motion artifact.

The location of the connected region may for example be determined as a predefined representative position within the connected region or as the position and, optionally, orientation of the whole contour of the connected region. The user output may for example indicate the representative position in the corresponding image domain, for example in the stitched image, or the position and, if applicable, orientation of the contour in the corresponding image domain, for example in the stitched image. The user output may, for example, include a visual representation of the location of the motion artifact in the corresponding image domain, for example in the stitched image. Alternatively or in addition the user output may, for example, text output indicating the location of the connected region and/or an acoustic output indicating the existence and/or location of the connected region.

In this way, the user is enabled to directly identify the location of the motion artifact, its relevance or criticality in a simple way.

According to several embodiments, the user output comprises the visual representation of the stitched image, wherein the location of the motion artifact in the stitched image is indicated.

For example, the visual representation may correspond to an augmented version of the stitched image, wherein the representation of the location of the motion artifact is overlaid over the stitched image.

In this way, the user is enabled to directly identify the location of the motion artifact, its relevance or criticality in a simple way.

According to several embodiments, the first image is generated independent of the second acquired dataset and/or the second image is generated independent of the first acquired dataset.

In particular, the first image is generated depending only on the first acquired data set and/or the second image is generated depending only on the second acquired data set.

In particular, in case the first image is generated independent of the second acquired data set and the second image is generated independent of the first acquired data set, this may be particularly beneficial in case the stitched image is generated according to the stacking approach, while this is not mandatory.

According to several embodiments a part of the first image corresponding to the overlap region, in particular the whole respective part of the first image corresponding to the overlap region, is generated depending on the first acquired dataset and the second acquired dataset.

For example, the part of the first image corresponding to the overlap region may be generated depending on averaged data, which is generated by averaging respective parts of the first acquired dataset and the second acquired dataset.

According to several embodiments a part of the second image corresponding to the overlap region, in particular the whole respective part of the second image corresponding to the overlap region, is generated depending on second first acquired dataset and the first acquired dataset.

For example, the part of the second image corresponding to the overlap region may be generated depending on further averaged data, which is generated by averaging respective parts of the first acquired dataset and the second acquired dataset.

According to several embodiments, a first part of the second image corresponding to the first part of the overlap region is generated depending on the first acquired dataset and independent of the second acquired dataset and a second part of the second image corresponding to the second part of the overlap region is generated depending on the second acquired dataset and independent of the first acquired dataset.

According to several embodiments, a first part of the first image corresponding to the first part of the overlap region is generated depending on the first acquired dataset and independent of the second acquired dataset and a second part of the first image corresponding to the second part of the overlap region is generated depending on the second acquired dataset and independent of the first acquired dataset.

The different embodiments for generating the first image and the second image in the overlap region may be combined in different combinations, for example to represent the appearance of the motion artifact in the stitched image as consistent as possible or feasible.

Beneficial but non-limiting examples include:
a) The first image is generated independent of the second acquired dataset and the second image is generated independent of the first acquired dataset
b) The first part of the second image corresponding to a first part of the overlap region is generated depending on the first acquired dataset and independent of the second acquired dataset, the second part of the second image corresponding to a second part of the overlap region is generated depending on the second acquired dataset and independent of the first acquired dataset, and the part of the first image corresponding to the overlap region is generated depending on the averaged data.

According to several embodiments, the motion artifact is classified depending on a size and/or geometric shape of the connected region.

In particular, the classification may comprise assigning a size class of two or more predefined size classes to the motion artifact depending on the area or volume occupied by the connected region in the difference map.

Consequently, the user may assess the relevance or criticality of the motion artifact easier. It is also possible that the user output indicating the existence and/or location et cetera of the motion artifact is only generated or output in case the size of the motion artifact is at least a minimum size according to the classification. Alternatively or in addition, the user output may comprise or indicate the respective size class assigned to the motion artifact.

It is also possible that a plurality of artifacts including the motion artifact and one or more further motion artifacts is detected. The above-mentioned embodiments and the explanations regarding the motion artifact and its detection carry over analogously for the one or more further motion artifacts.

In case the plurality of artifacts is detected, they may for example be filtered or sorted according to their size. In this case, the user output indicating the existence and/or location et cetera of the motion artifact may for example be generated or output at most for the N largest artifacts of the plurality of artifacts, wherein N is a predefined positive integer number, for example N ≥ 1 or N ≥ 2 or N ≥ 3.

In particular, the classification may comprise assigning a shape class of two or more predefined shape classes to the motion artifact depending on the geometric shape of the connected region in the difference map.

The two or more predefined shape classes may for example correspond to different causes of the motion artifact, such as respiratory motion of the chest, respiratory motion of the diaphragm, peristaltic motion, cardiac motion, patient motion, et cetera.

Consequently, the user may assess the relevance or criticality of the motion artifact easier. It is also possible that the user output comprises or indicates the respective shape class assigned to the motion artifact.

In particular, the classification may comprise assigning a size-and-shape class of two or more predefined size-and-shape classes to the motion artifact depending on the size and the geometric shape of the connected region in the difference map.

Consequently, the user may assess the relevance or criticality of the motion artifact easier. In particular, the shape of the motion artifact may influence how the size of the motion artifact affects the criticality of the motion artifact or vice versa.

According to several embodiments, the first acquired dataset and the second acquired dataset correspond to CT datasets or MRI datasets.

According to several embodiments, the first image and the second image are three-dimensional volume reconstructions, the difference map is a three-dimensional map, and the connected region is a three-dimensional region in the difference map. In particular, also the first region of the object and the second region of the object are three-dimensional regions.

In such embodiments, the first region and the second region of the object may for example differ by a shift in one spatial direction, denoted for example as z-direction. Depending on the used medical imaging device, the z-direction may for example correspond to a direction perpendicular to a plane in which the detector and X-ray source of the CT device rotate or the direction of the main magnetic field of the MRI device.

According to a further aspect of the invention, a method for medical imaging is provided. Therein, a first acquired dataset representing a first region of an object is acquired during a first time period by a medical imaging device and a second acquired dataset representing a second region of the object is acquired during a second time period by the medical imaging device. The second region of the object overlaps with the first region of the object in an overlap region. A computer-implemented method for detecting a motion artifact according to the invention is carried out based on the first acquired dataset and the second acquired dataset. A stitched image representing the first region and the second region is generated depending on the first acquired dataset and the second acquired dataset.

For example, a user output is generated based on the detection of the motion artifact.

According to several embodiments of the method for medical imaging, the first acquired dataset and the second acquired dataset are acquired by a CT device or by an MRI device and/or the first image and the second image are generated as three-dimensional volume reconstructions, the difference map is generated as a three-dimensional map, and the connected region is a three-dimensional region in the difference map.

According to several embodiments, the first time period corresponds, in particular nominally corresponds, to a predefined phase of a cyclic motion, for example a predefined cardiac phase or predefined respiratory phase, of the object. The first acquired dataset is acquired at a fixed first position of the object according to a predefined direction. The second time period corresponds, in particular nominally corresponds, to the same predefined phase of the cyclic, for example the cardiac phase or respiratory phase. The second acquired dataset is acquired at a fixed second position of the object according to the predefined direction, which differs from the first position.

That the first and the second time period nominally correspond to the phase of the cyclic motion may be understood such that they should theoretically correspond to the same phase of the cyclic motion, but there may be deviations due to physiological reasons, inaccurate timing of the first and the second time period with respect to each other, different behavior, for example breathing behavior, of the patient, et cetera.

That the first acquired dataset is acquired at the fixed first position and the second acquired dataset is acquired at the fixed second position may for example be understood such that the position of the object along the predefined direction, in particular the z-direction, is constant during the first time period. During the second time period it is also constant but different from the position during the first time period, such that the overlap region results as described above.

Such embodiments are particularly beneficial for imaging a relatively large part of the object nominally the same phase of the cyclic motion. The method steps may, in particular, be repeated for different phases of the cyclic motion.

According to several embodiments, the first time period corresponds to a predefined phase of a cyclic motion, for example a predefined cardiac phase or a predefined respiratory phase. The second time period corresponds to the predefined phase of the cyclic motion. The object is moved along a predefined direction during the first time period and during the second time period and during a further time period between the first time period and the second time period.

The motion is, for example, carried out with a constant speed and/or constantly along the same direction. Consequently, in particular for CT, a spiral data acquisition is implemented. In this case, the invention is particularly beneficial, since the constant motion bears an increased risk for not optimal timing of the first time period and the second time period.

Further implementations of the method according to the invention follow directly from the various embodiments of the computer-implemented method according to the invention and vice versa. In particular, individual features and corresponding explanations as well as advantages relating to the various implementations of the computer-implemented method according to the invention can be transferred analogously to corresponding implementations of the method according to the invention.

According to a further aspect of the invention, a data processing system, which is configured to carry out a computer-implemented method according to the invention, is provided.

In the present disclosure, the expressions "data processing system" and "at least one data processing device" may be used interchangeably. A data processing device may in particular be understood as a data processing device, which comprises processing circuitry. The data processing device can therefore in particular process data to perform computing operations. This may also include operations to perform indexed accesses to a data structure, for example a look-up table, LUT, as well as a data processing process implemented in hardware.

In particular, the data processing device may include one or more computers, one or more microcontrollers, and/or one or more integrated circuits, for example, one or more applicationspecific integrated circuits, ASIC, one or more field-programmable gate arrays, FPGA, and/or one or more systems on a chip, SoC. The data processing device may also include one or more processors, for example one or more microprocessors, one or more central processing units, CPU, one or more graphics processing units, GPU, and/or one or more signal processors, in particular one or more digital signal processors, DSP. The data processing device may also include a physical or a virtual cluster of computers or other of said units.

In various embodiments, the data processing device includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

According to a further aspect of the invention, comprising a medical imaging device, for example a CT device or an MRI device, and a data processing system according to the invention is provided.

In particular, the medical imaging device is configured to generate the first acquired data set and the second acquired data set.

According to a further aspect of the invention, a computer program comprising instructions is provided. When the instructions are executed by a data processing system, the instructions cause the data processing system to carry out a computer-implemented method according to the invention.

The instructions may be provided as program code, for example. The program code can for example be provided as binary code or assembler and/or as source code of a programming language, for example C, and/or as program script, for example Python.

According to a further aspect of the invention, a further computer program comprising further instructions is provided. When the further instructions are executed by a according to the invention, in particular by the data processing system of the medical imaging system, the further instructions cause the medical imaging system to carry out a method for medical imaging according to the invention.

The further instructions may be provided as program code, for example. The program code can for example be provided as binary code or assembler and/or as source code of a programming language, for example C, and/or as program script, for example Python.

According to a further aspect of the invention, a computer-readable storage medium, in particular a tangible and/or non-transient computer readable storage medium, storing a computer program and/or a further computer program according to the invention is provided.

The computer program, the further computer program and the computer-readable storage medium are respective computer program products comprising the instructions and/or the further instructions.

Further features and feature combinations of the invention are obtained from the figures and their description as well as the claims. In particular, further implementations of the invention may not necessarily contain all features of one of the claims. Further implementations of the invention may comprise features or combinations of features, which are not recited in the claims.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
- FIG 1: shows schematically an exemplary implementation of a medical imaging system according to the invention;
- FIG 2: shows a schematic flow diagram of an exemplary implementation of a computer-implemented method for detecting a motion artifact in medical imaging data according to the invention;
- FIG 3: shows schematically a stitched image with highlighted motion artifacts;
- FIG 4: shows schematically a further stitched image with highlighted motion artifacts;
- FIG 5: shows schematically a further stitched image with highlighted motion artifacts;
- FIG 6: shows schematically a further stitched image with highlighted motion artifacts;
- FIG 7: shows schematically a further stitched image with highlighted motion artifacts; and
- FIG 8: shows schematically a difference map according to a further exemplary implementation of a computer-implemented method for detecting a motion artifact in medical imaging data according to the invention.

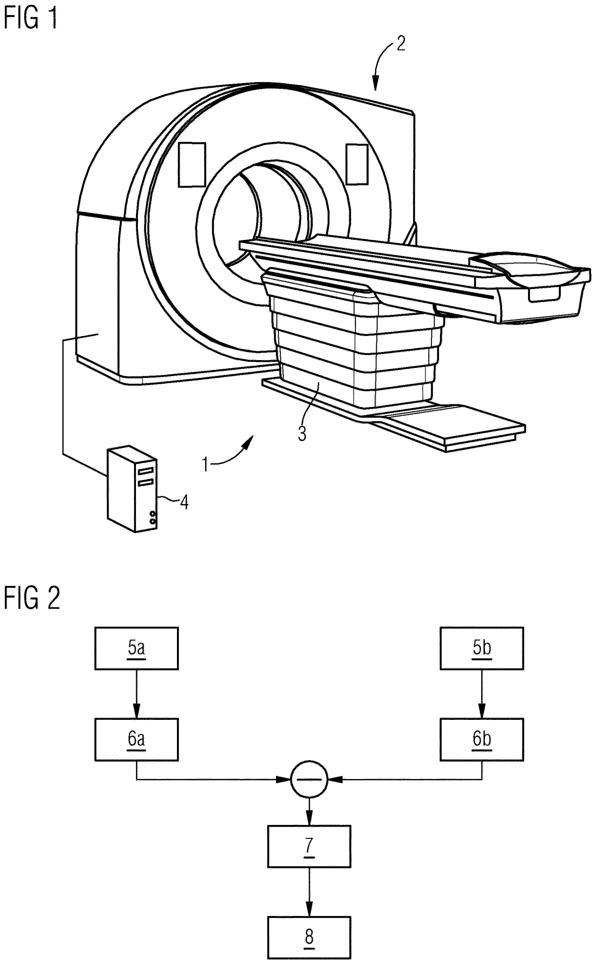

FIG 1 shows schematically an exemplary implementation of a medical imaging system 1 according to the invention. The medical imaging system 1 comprises a medical imaging device 2, which is displayed as a CT device in FIG 1. The medical imaging system one may also comprise a support 3, for example a patient table, on which an object 10, 11, 13, 14a, 14b, 14c, 15, 16, in particular a patient, to be imaged by the medical imaging device 2 may be placed.

The medical imaging device 2 is configured to acquire a first acquired dataset 5a representing a first region of an object 10, 11, 13, 14a, 14b, 14c, 15, 16 during a first time period and a second acquired dataset 5b representing a second region of the object 10, 11, 13, 14a, 14b, 14c, 15, 16 during a second time period by the medical imaging device, wherein the second region of the object 10, 11, 13, 14a, 14b, 14c, 15, 16 overlaps with the first region of the object 10, 11, 13, 14a, 14b, 14c, 15, 16 in an overlap region.

In some implementations, the first and the second time period correspond to the same phase of a cyclic motion, for example a respiratory or cardiac motion of the patient. For example, the object may be shifted along a predefined direction, in particular the z-direction perpendicular to the rotational plane of the CT device, between the first time period and the second time period. Consequently, the first region and the second region of the object 10, 11, 13, 14a, 14b, 14c, 15, 16 Represent different regions shifted along said direction, which overlap in the overlap region.

The medical imaging device 1 further comprises a data processing system 4 according to the invention, which is configured to carry out a computer-implemented method for detecting a motion artifact 12a, 12b, 12c, 12d, 12e, 12f, 12g, 12h, 12i, 12j, 12k in the medical imaging data according to the invention.

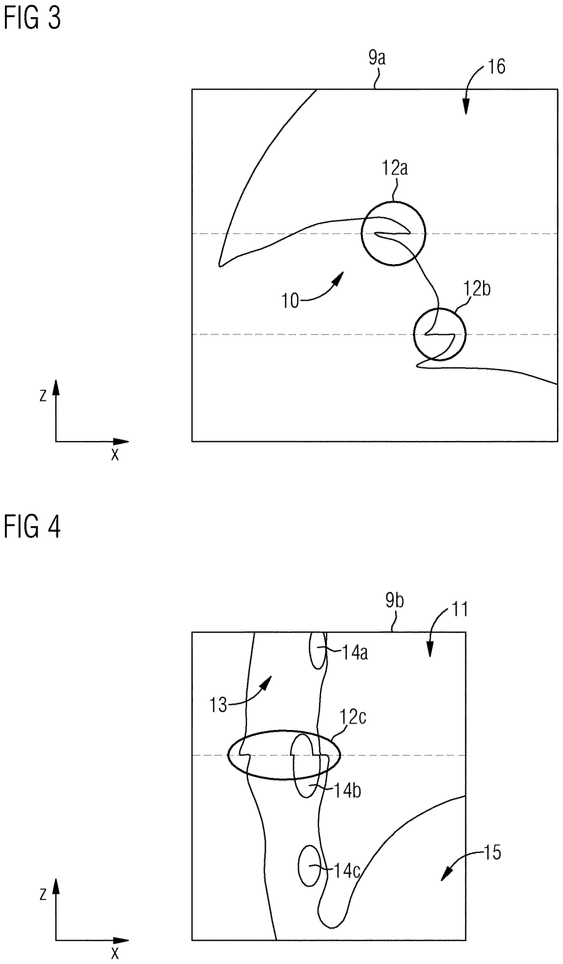

The data processing system 4 may for example generate a stitched image 9a, 9b, 9c, 9d, 9e (see FIG 3 to FIG 7) representing the first region and the second region depending on the first acquired dataset 5a and the second acquired dataset 5b. The stitched image 9a, 9b, 9c, 9d, 9e may then for example be displayed on a display device of the medical imaging system 1, for example of the data processing system 4. In particular, a marker indicating a location of the motion artifact 12a, 12b, 12c, 12d, 12e, 12f, 12g, 12h, 12i, 12j, 12k may be overlaid over the stitched image 9a, 9b, 9c, 9d, 9e.

FIG 2 shows a schematic flow diagram of an exemplary implementation of a computer-implemented method for detecting a motion artifact 12a, 12b, 12c, 12d, 12e, 12f, 12g, 12h, 12i, 12j, 12k according to the invention.

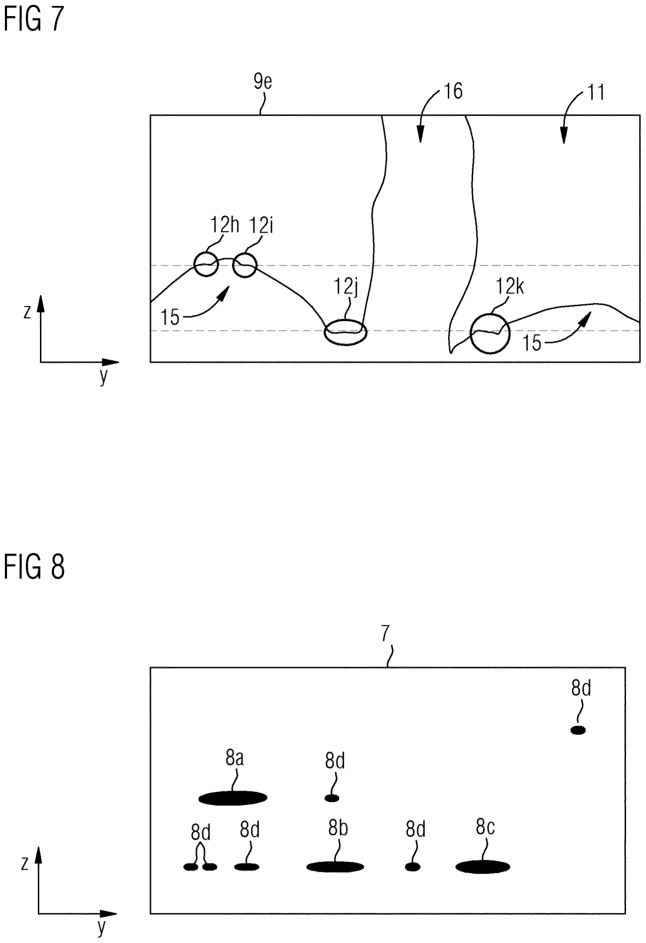

Therein, a first image 6a representing at least the overlap region is generated depending on the first acquired dataset 5a and a second image 6b representing at least the overlap region is generated depending on the second acquired dataset 5b. A difference map 7 (see FIG 8) for the overlap region is generated by subtracting the first image 6a and the second image 6b from each other. The motion artifact 12a, 12b, 12c, 12d, 12e, 12f, 12g, 12h, 12i, 12j, 12k is detected by determining a connected region 8 in the difference map 7, wherein absolute values of the difference map 7 are equal to or greater than a predefined threshold value within the connected region 8.

Figures FIG 3 to FIG 7 show various schematic representations of organ contours in the chest 16 and lower abdomen 11, respectively, mimicking examples for stitched images 9a, 9b, 9c, 9d, 9e. Horizontal dashed lines correspond to stitching positions in z-direction according to a stacking approach.

FIG 3 depicts a contour of the heart 10. There are three segments shown, whose underlying raw data has been acquired during different time periods. Apparently, in the upper and lower segments, the heart has been less contracted than in the middle segment. This leads to corresponding motion artifacts 12a, 12b at the boundaries between the segments.

FIG 4 depicts a contour of the rib cage 14a, 14b, 14c and the chest wall 13 as well as the diaphragm 15. There are two segments shown, whose underlying raw data has been acquired during different time periods. Apparently, in the upper segment, the chest wall has been located more to the left than in the lower segment. This leads to a corresponding motion artifact 12c, which indicates a motion due to chest breathing at the boundary between the segments.

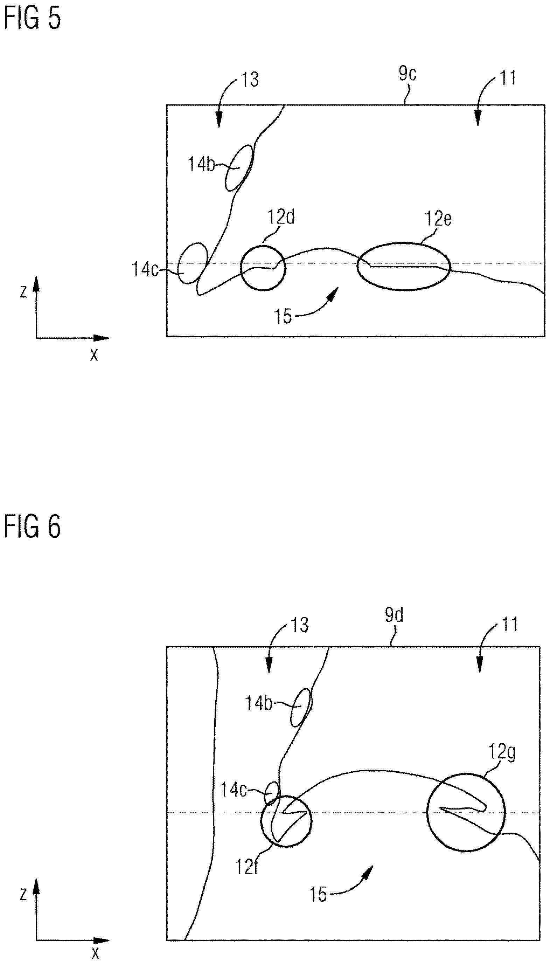

FIG 5 depicts a contour of the rib cage 14b, 14c and the chest wall 13 as well as the diaphragm 15. There are two segments shown, whose underlying raw data has been acquired during different time periods. Apparently, in the upper segment, the diaphragm 15 has been contracted stronger than in the lower segment. This leads to corresponding motion artifacts 12d, 12e, which indicates a motion due to diaphragmatic breathing at the boundary between the segments.

FIG 6 depicts a contour of the rib cage 14b, 14c and the chest wall 13 as well as the diaphragm 15. There are two segments shown, whose underlying raw data has been acquired during different time periods. Apparently, in the upper segment, the diaphragm 15 has been contracted less than in the lower segment. This leads to corresponding motion artifacts 12f, 12g, which indicates a motion due to diaphragmatic breathing at the boundary between the segments.

FIG 7 depicts a contour of the spine 16 and the diaphragm 15. There are three segments shown, whose underlying raw data has been acquired during different time periods. Apparently, in the middle segment, the diaphragm 15 has been contracted stronger than in the lower segment. In the upper segment, the diaphragm 15 has been contracted stronger than in the middle segment. This leads to corresponding motion artifacts 12h, 12i, 12j, 12k, which indicates a motion due to diaphragmatic breathing at the boundary between the segments.

It is noted that FIG 3 to FIG 7 show two-dimensional stitched images 9a, 9b, 9c, 9d, 9e or two-dimensional sections of three-dimensional stitched images 9a, 9b, 9c, 9d, 9e.

FIG 8 shows schematically a thresholded difference map 7 for the example of FIG 7. Therein, all voxels or pixels, respectively, in the difference map 7, whose entries have an absolute value of at least a predefined threshold value, are shown as filled regions, while all other voxels or pixels, respectively, are empty. One can easily identify several connected regions 8a, 8b, 8c, 8d of filled voxels or pixels, respectively, which correspond to motion artifacts in the stitched image 9e. For example, the connected region 8a may correspond to the motion artifacts 12h, 12i, the connected region 8b may correspond to the motion artifact 12j, and the connected region 8c may correspond to the motion artifact 12k. The remaining connected regions 8d, which are significantly smaller than the connected regions 8a, 8b, 8c may correspond to minor motion artifacts, which are not depicted in the stitched image 9e.

As described, the invention provides a simple and reliable way to detect motion artifacts in medical imaging data.

In several embodiments, the motion artifacts correspond to inaccurate alignments of multiple acquisitions, which lead to incorrect three-dimensional data in a given phase of a cyclic motion.

In several embodiments, the approach according to the invention allows to parametrize and determine the severity of the misalignments in a fast and accurate manner. In particular, the subtraction operation and the connected component analysis are simple to implement and fast to carry out.

In particular, artifacts due to various kinds of motion, for example breathing, heartbeat, peristalsis or external patient motions or movements of the patient support, may be detected.

In several embodiments, the medical imaging data or the stitched images may be discarded or approaches to re-align the different portions of data may be applied, for example deformable registration techniques.

In several embodiments, the individual acquisitions are done with a small overlap. Each acquisition may cover a range up to the full detector width. The overlap may for example be approximately 10% of the detector width.

In several embodiments, two three-dimensional images, in particular volumes, are reconstructed from the acquired data. In one volume, voxels in the overlap region are reconstructed only from the acquisition with the lower z-coordinate, and in the other volume only data from the acquisition with the dataset according to the higher z-coordinate are used. Alternatively, one volume may be reconstructed by merging, in particular averaging, data in the overlap region and the other volume may be reconstructed without merging and a hard transition at the center of the overlap region. In some embodiments, the two volumes may be composed of only the overlap region.

In several embodiments, the two volumes are subtracted, resulting in non-zero differences only in the vicinity of the overlap regions.

In several embodiments, the subtracted values are thresholded such that Isl > T, wherein s is the difference value, and T is the threshold value. The parameter T may be used to parametrize the size of the motion artifacts.

In several embodiments, the thresholded foreground is divided into connected components. In several embodiments, connected components below a predefined size S are discarded. In several embodiments, center points of the largest connected components are used to indicate corresponding misalignments. The parameter S may be used to parametrize the size of the motion artifacts.

In several embodiments, a mask of specific organs can be used to limit the motion artifact detection to specific body regions.

In several embodiments, the shape of the connected components may be used to select specific motion directions, for example if one is interested primarily in anterior-posterior motion, one could examine the largest anterior-posterior diameter in the connected components. For example, the specific shape of the connected region allows to identify the direction of the underlying motion and therefore to distinguish different types of motion. For example, a diaphragmatic motion may be distinguished from a motion of the chest wall in this way.

In several embodiments, morphological operations, for example erosion, may be used to further parametrize the motion artifacts. This may help to distinguish different types of underlying motions from each other, for example by differentiating between relatively long and/or flat connected regions on the one hand and relatively short and/or broad connected regions. For example, if the connected region survives the erosion process, which needs to be parametrized in a suitable manner, the underlying motion may be due to diaphragmatic breathing, while otherwise it may be due to chest breathing, for example.

Independent of the grammatical term usage, individuals with male, female or other gender identities are included within the term.

## Claims

1. Computer-implemented method for detecting a motion artifact (12a, 12b, 12c, 12d, 12e, 12f, 12g, 12h, 12i, 12j, 12k) in medical imaging data, wherein
- the medical imaging data comprises a first acquired dataset (5a) acquired during a first time period and representing a first region of an object (10, 11, 13, 14a, 14b, 14c, 15, 16) and a second acquired dataset (5b) acquired during a second time period and representing a second region of the object (10, 11, 13, 14a, 14b, 14c, 15, 16), wherein the second region of the object (10, 11, 13, 14a, 14b, 14c, 15, 16) overlaps with the first region of the object (10, 11, 13, 14a, 14b, 14c, 15, 16) in an overlap region;
- a first image (6a) representing at least the overlap region is generated depending on the first acquired dataset (5a) and a second image (6b) representing at least the overlap region is generated depending on the second acquired dataset (5b);
- a difference map (7) for the overlap region is generated by subtracting the first image (6a) and the second image (6b) from each other;
- the motion artifact (12a, 12b, 12c, 12d, 12e, 12f, 12g, 12h, 12i, 12j, 12k) is detected by determining a connected region (8, 8a, 8b, 8c, 8d) in the difference map (7), wherein absolute values of the difference map (7) are equal to or greater than a predefined threshold value within the connected region (8, 8a, 8b, 8c, 8d).

2. Computer-implemented method according to claim 1, wherein
- a location of the motion artifact (12a, 12b, 12c, 12d, 12e, 12f, 12g, 12h, 12i, 12j, 12k) is determined by determining a location of the connected region (8, 8a, 8b, 8c, 8d) based on the difference map (7); and
- a user output is generated depending on the location of the motion artifact (12a, 12b, 12c, 12d, 12e, 12f, 12g, 12h, 12i, 12j, 12k).

3. Computer-implemented method according to claim 2, wherein
- a stitched image (9a, 9b, 9c, 9d, 9e) representing the first region and the second region is generated depending on the first acquired dataset (5a) and the second acquired dataset (5b); and
- the user output comprises a visual representation of the stitched image (9a, 9b, 9c, 9d, 9e), wherein the location of the motion artifact (12a, 12b, 12c, 12d, 12e, 12f, 12g, 12h, 12i, 12j, 12k) in the stitched image (9a, 9b, 9c, 9d, 9e) is indicated.

4. Computer-implemented method according to one of the preceding claims, wherein the first image (6a) is generated independent of the second acquired dataset (5b).

5. Computer-implemented method according to one of claims 1 to 3, wherein a part of the first image (6a) corresponding to the overlap region is generated depending on the first acquired dataset (5a) and the second acquired dataset (5b).

6. Computer-implemented method according to claim 5, wherein
- averaged data representing the overlap region is generated by averaging respective parts of the first acquired dataset (5a) and the second acquired dataset (5b); and
- the part of the first image (6a) corresponding to the overlap region is generated depending on the averaged data.

7. Computer-implemented method according to one of the preceding claims, wherein
- a first part of the second image (6b) corresponding to a first part of the overlap region is generated depending on the first acquired dataset (5a) and independent of the second acquired dataset (5b); and
- a second part of the second image (6b) corresponding to a second part of the overlap region is generated depending on the second acquired dataset (5b) and independent of the first acquired dataset (5a).

8. Computer-implemented method according to one of the preceding claims, wherein the motion artifact (12a, 12b, 12c, 12d, 12e, 12f, 12g, 12h, 12i, 12j, 12k) is classified depending on a size and/or geometric shape of the connected region (8, 8a, 8b, 8c, 8d).

9. Computer-implemented method according to one of the preceding claims, wherein a direction of a motion, which has caused the motion artifact (12a, 12b, 12c, 12d, 12e, 12f, 12g, 12h, 12i, 12j, 12k), is determined depending on the geometric shape of the connected region (8, 8a, 8b, 8c, 8d).

10. Computer-implemented method according to one of the preceding claims, wherein
- the first acquired dataset (5a) and the second acquired dataset (5b) correspond to computed tomography datasets or magnetic resonance imaging datasets; and/or
- the first image (6a) and the second image (6b) are three-dimensional volume reconstructions, the difference map (7) is a three-dimensional map, and the connected region (8, 8a, 8b, 8c, 8d) is a three-dimensional region in the difference map (7).

11. Method for medical imaging, wherein
- a first acquired dataset (5a) representing a first region of an object (10, 11, 13, 14a, 14b, 14c, 15, 16) is acquired during a first time period by a medical imaging device (2) and a second acquired dataset (5b) representing a second region of the object (10, 11, 13, 14a, 14b, 14c, 15, 16) is acquired during a second time period by the medical imaging device (2), wherein the second region of the object (10, 11, 13, 14a, 14b, 14c, 15, 16) overlaps with the first region of the object (10, 11, 13, 14a, 14b, 14c, 15, 16) in an overlap region; and
- a computer-implemented method according to one of the preceding claims is carried out; and
- a stitched image (9a, 9b, 9c, 9d, 9e) representing the first region and the second region is generated depending on the first acquired dataset (5a) and the second acquired dataset (5b).

12. Method according to claim 11, wherein
- the first time period corresponds to a predefined cardiac phase or respiratory phase;
- the first acquired dataset (5a) is acquired at a fixed first position of the object (10, 11, 13, 14a, 14b, 14c, 15, 16) according to a predefined direction;
- the second time period corresponds to the predefined cardiac phase or respiratory phase; and
- the second acquired dataset (5b) is acquired at a fixed second position of the object (10, 11, 13, 14a, 14b, 14c, 15, 16) according to the predefined direction, which differs from the first position.

13. Method according to claim 11, wherein
- the first time period corresponds to a predefined cardiac phase or respiratory phase;
- the second time period corresponds to the predefined cardiac phase or respiratory phase;
- the object (10, 11, 13, 14a, 14b, 14c, 15, 16) is moved along a predefined direction during the first time period and the second time period and during a further time period between the first time period and the second time period.

14. Data processing system (4), which is configured to carry out a computer-implemented method according to one of claims 1 to 10.

15. Computer program product comprising instructions, which, when executed by a data processing system (4), cause the data processing system (4) to carry out a computer-implemented method according to one of claims 1 to 10.
